# EUROPÄISCHE PATENTSCHRIFT

(11) **EP 2 243 948 B1**
(45) Veröffentlichungstag und Bekanntmachung des Hinweises auf die Patenterteilung: **16.05.2012**
(21) Anmeldenummer: 10002150.0
(22) Anmeldetag: 03.03.2010
(51) Int. Cl.: F02M 35/02, B01D 50/00, F02B 29/04, F02M 35/10, F02M 35/022, F02M 35/024

(54) **Luftfilteranordnung eines Kraftfahrzeug-Aggregats**
Air filter assembly of a motor vehicle power unit
Agencement de filtre à air d'un agrégat de véhicule automobile

(30) Priorität: 06.03.2009 DE 102009011573; 12.06.2009 DE 102009024662
(43) Veröffentlichungstag der Anmeldung: 27.10.2010
(73) Patentinhaber: Audi AG, 85045 Ingolstadt (DE)
(72) Erfinder: Hetzel, Martin, 85114 Buxheim (DE); Bentenrieder, Andreas, 85586 Poing (DE)
(74) Vertreter: Lehle, Josef

(56) Entgegenhaltungen:
- EP-A1- 0 709 567
- CH-A5- 621 490
- DE-A1- 10 354 686
- DE-A1- 19 942 503
- FR-A1- 2 528 716
- FR-A1- 2 857 058

## Beschreibung

Die Erfindung betrifft eine Luftfilteranordnung eines Kraftfahrzeug-Aggregats, insbesondere einer Brennkraftmaschine eines Kraftfahrzeugs, mit einem Filterelement, dem ein eine Innenwand aufweisender Luftraum strömungstechnisch vorgeschaltet ist.

Luftfilteranordnungen mit den Merkmalen des Oberbegriffs des Anspruchs 1 sind aus dem Stand der Technik bekannt. Sie dienen zur Versorgung des Kraftfahrzeug-Aggregats mit gefilterter Reinluft. In die Luftfilteranordnung strömt dabei Rohluft ein, durchläuft ein Filterelement der Luftfilteranordnung und gelangt als gefilterte Reinluft wieder aus der Luftfilteranordnung heraus. Es kann vorgesehen sein, dass die in die Luftfilteranordnung einströmende Rohluft bereits vorgefiltert ist, oder dass in der Luftfilteranordnung eine Vorfilterung vor dem eigentlichen Filterelement vorgesehen ist. In der Luftfilteranordnung kann eine beliebige Filterart für das Filterelement vorgesehen sein. Beispiele für solche Filterarten sind Siebfilter, Faserfilter, Nassfilter, Zentrifugalfilter, Papierfilter, Vliesfilter und dergleichen. Das Siebfilter kann beispielsweise Metall- oder Kunststoffsiebe aufweisen. Dem Filterelement ist strömungstechnisch der Rohluftraum vorgeschaltet. Das bedeutet, dass die Rohluft zunächst den Rohluftraum durchströmt, bevor sie dem Filterelement zugeführt wird. Üblicherweise wird der Rohluftraum zum Beruhigen der Rohluft und/oder zur Abscheidung von in der Rohluft vorhandener Flüssigkeit oder Partikeln verwendet. Die Flüssigkeit setzt sich auf der Innenwand des Rohluftraums ab und wird nachfolgend von dort abgeführt. Auf der Innenwand kommt es dabei zur Bildung von Tropfen. Diese werden jedoch häufig von der die Innenwand überströmenden Rohluft wieder abgelöst und gelangt somit zusammen mit dieser in das Filterelement. Bei einer daraus resultierenden Durchfeuchtung des Filterelements kann es bei den in einer solchen Luftfilteranordnung üblicherweise vorliegenden hohen Rohluftmassenströmen zu einem Durchschlagen der Flüssigkeit auf die Reinluftseite des Filterelements kommen. Die aus der Luftfilteranordnung herausgelangende Reinluft weist somit noch Flüssigkeit beziehungsweise Flüssigkeitsligamente auf, was unter Umständen für das Kraftfahrzeug-Aggregat von Nachteil sein kann.

Luftfilteranordnungen mit Wasserabscheidern sind z.B. aus DE 10354686 A1 oder DE 19942503A1 bekannt. Es ist daher die Aufgabe der Erfindung eine Luftfilteranordnung bereitzustellen, welche die vorstehend genannten Nachteile nicht aufweist und insbesondere ein Durchfeuchten des Filterelements verhindert, indem Flüssigkeit wirkungsvoll aus der Rohluft abgeschieden wird.

Dies wird erfindungsgemäß mit einer Luftfilteranordnung mit den Merkmalen des Anspruchs 1 erreicht. Dabei ist vorgesehen, dass die Innenwand des Rohluftraums zumindest in einem von Rohluft angeströmten Bodenbereich mit einer materialeinheitlich zum Material der Innenwand ausgebildeten Oberflächenstruktur versehen ist. Die Oberflächenstruktur sorgt dafür, dass auf der Innenwand abgelagerte Flüssigkeit nicht mehr oder nur in geringem Ausmaß zurück in die Rohluft gelangen kann. Auf diese Weise wird verhindert, dass die Flüssigkeit in das Filterelement gelangt und es somit zu einem Durchfeuchten desselben kommt. Die Oberflächenstruktur der Innenwand ist derart ausgebildet, dass sich auf der Innenwand anstatt der Flüssigkeitstropfen ein Flüssigkeitsfilm bildet. Auf diese Weise kann ein deutlich reduzierter Flüssigkeitseintritt in das Filterelement erreicht werden. Insbesondere bei Durchführung einer Gischtprüfung mit der Luftfilteranordnung sind so deutlich verbesserte Ergebnisse erreichbar. Ebenso kann eine eventuell vorgesehene Zusatzansaugung entfallen. Die Oberflächenstruktur ist regelmäßig ausgebildet. Beispielsweise ist die Oberflächenstruktur durch auf der Oberfläche ausgebildete Strukturelemente gebildet. Diese Strukturelemente können eine beliebige Größenordnung aufweisen, beispielsweise im Mikrometer-Bereich (also kleiner als ein Millimeter). Dabei sind sie jedoch stets derart ausgebildet, dass die Flüssigkeit überwiegend in Form des Flüssigkeitsfilms an der Oberfläche der Innenwand und nicht als Tropfen vorliegt.

Die Oberflächenstruktur ist materialeinheitlich zum Material der Innenwand ausgebildet. Das bedeutet, die Oberflächenstruktur beziehungsweise die Strukturelemente bestehen aus demselben Material wie die Innenwand. Es kann vorgesehen sein, dass nicht die gesamte Oberfläche der Innenwand mit der Oberflächenstruktur versehen ist, sondern lediglich ein Bereich der Innenwand. Dieser ist insbesondere dort vorgesehen, wo die Innenwand von der Rohluft angeströmt oder überströmt wird. Dies ist beispielsweise in einem Eintrittsbereich der Luftfilteranordnung der Fall. Dort strömt die Rohluft auf den Bereich der Innenwand zu, trifft auf diese auf und wird dadurch umgelenkt. In diesem Bereich ist es sehr effizient möglich, die Flüssigkeit aus der Rohluft abzuscheiden, da sie durch das Auftreffen der Rohluft auf die Innenwand aus der Rohluft abgeschieden wird und sich auf der Innenwand anlagert. Dabei soll nun erfindungsgemäß verhindert werden, dass dies in Form von Tropfen geschieht und dass stattdessen der Flüssigkeitsfilm gebildet wird. Der mit der Oberflächenstruktur versehene Bereich der Innenwand ist vorzugsweise derart angeordnet, dass die Flüssigkeit in Form des Flüssigkeitsfilms ablaufen und nachfolgend aus der Luftfilteranordnung ausgebracht werden kann.

Eine Weiterbildung der Erfindung sieht vor, dass die Oberflächenstruktur eine durch Aufrauung gebildete Struktur ist. Das Ausbilden der Oberflächenstruktur ist demnach vor einer Inbetriebnahme der Luftfilteranordnung vorgesehen. Die strukturierte Oberfläche der Innenwand weist durch die Aufrauung gebildete Strukturelemente auf. Die Aufrauung kann unter Anwendung beliebiger geeigneter Maßnahmen vorgesehen sein. Die Oberflächenstruktur kann dabei Strukturelemente beliebiger Größenordnungen aufweisen, vorzugsweise jedoch im Mikrometer-Bereich. Es werden also Strukturelemente verwendet, die Abmessungen kleiner einem Millimeter aufweisen. Es kann auch vorgesehen sein, die Größenordnung der Strukturelemente zu variieren, sodass beispielsweise in einem Bereich der Innenwand Strukturelemente einer Größenordnung und in einem weiteren Bereich in einer davon unterschiedlichen Größenordnung vorgesehen sind. Mit Aufrauung ist generell eine Unebenheit in einer Oberflächenhöhe der Innenwand gemeint.

Eine Weiterbildung der Erfindung sieht vor, dass die Oberflächenstruktur eine Sandstrahlstruktur oder eine Narbenstruktur ist. Besonders vorteilhaft lässt sich die Aufrauung der Innenwand mittels Sandstrahlen bewirken. Dabei wird der Bereich der Innenwand, in welchem die Oberflächenstruktur auszubilden ist, oder ein Bereich eines zur Herstellung der Innenwand verwendeten Werkzeugs einem mit Strahlmittel, beispielsweise Sand, versetzten Luftstrom ausgesetzt. Das mit hoher Geschwindigkeit auf die Innenwand beziehungsweise das Werkzeug auftreffende Strahlmittel trägt Teile der Innenwand beziehungsweise des Werkzeugs ab, sodass in dem Bereich der Innenwand die Oberflächenstruktur ausgebildet ist beziehungsweise beim Herstellen der Innenwand erzeugt ist. Als Strahlmittel können neben Sand auch Materialien wie Glasgranulat, Stahl, Kunststoff und ähnliches eingesetzt werden. Das Werkzeug kann beispielsweise eine Spritzgussvorrichtung sein. Die Oberflächenstruktur kann alternativ auch als Narbenstruktur vorliegen. Das bedeutet, dass die Innenwand beziehungsweise der Bereich der Innenwand mit unregelmäßig verlaufenden Furchen versehen ist, die eine derartige Narbenstruktur ausbilden.

Eine Weiterbildung der Erfindung sieht vor, dass die Oberflächenstruktur zusammen mit der Innenwand erstellt ist. Es ist vorgesehen, die Oberflächenstruktur nicht erst auszubilden, nachdem die Innenwand hergestellt wurde, sondern sie gleichzeitig mit der Innenwand zu erzeugen. Die Oberflächenstruktur wird insofern bei dem Herstellungsprozess der Innenwand erzeugt. Auf diese Weise kann ein zusätzlicher Herstellungsschritt bei der Produktion der Luftfilteranordnung vermieden werden.

Eine Weiterbildung der Erfindung sieht vor, dass die Innenwand ein Spritzgussteil oder ein Bereich eines Spritzgussteils, insbesondere jeweils aus Kunststoff, ist. Es ist also eine Herstellung der Innenwand beziehungsweise eines die Innenwand aufweisenden Bauteils mittels eines Spritzgussverfahrens vorgesehen. Dabei kann prinzipiell jeder beliebige Werkstoff vorgesehen sein, vorteilhafterweise wird jedoch Kunststoff eingesetzt. Die Herstellung im Spritzgussverfahren erlaubt eine besonders kostengünstige Produktion der Luftfilteranordnung. Die Oberflächenstruktur kann zusammen mit der Innenwand in dem Spritzgussverfahren erstellt sein oder nachträglich aufgebracht werden.

Eine Weiterbildung der Erfindung sieht vor, dass der Bereich ein Bodenbereich des Rohluftraums ist. Der Bodenbereich kann zum Sammeln und Ausbringen der aus der Luft ausgeschiedenen Flüssigkeit vorgesehen sein. Auch besteht in dem Bodenbereich nicht die Gefahr, dass abgeschiedene Flüssigkeit, beispielsweise durch Abtropfen infolge einer Einwirkung von Schwerkraft, ohne Weiteres wieder von der Rohluft aufgenommen werden kann. In dem Bodenbereich kann die Flüssigkeit vielmehr einfach ablaufen und aus der Luftfilteranordnung ausgebracht werden.

Eine Weiterbildung der Erfindung sieht vor, dass der Rohluftraum eine Rohluftschale aufweist, die mit der Oberflächenstruktur versehen ist. Der Rohluftraum beziehungsweise die Luftfilteranordnung ist beispielsweise aus Schalenteilen zusammengesetzt. Dabei kann der Rohluftraum die Rohluftschale aufweisen. Die Rohluftschale bildet die Innenwand des Rohluftraums zumindest bereichsweise aus, sodass die Oberflächenstruktur demzufolge an der Rohluftschale vorgesehen ist. Die Rohluftschale kann als Spritzgussteil hergestellt sein. Besonders vorteilhaft ist sie derart ausgebildet, dass ein einfaches Verbinden der Rohluftschale mit mindestens einem weiteren Schalenteil der Luftfilteranordnung möglich ist. Beispielsweise können an der Rohluftschale und dem weiteren Schalenteil Rastmittel vorgesehen sein, sodass eine, insbesondere lösbare, Rastverbindung zwischen diesen herstellbar ist. Es kann jedoch auch vorgesehen sein, die Rohluftschale mit dem weiteren Schalenteil zu verschweißen, sodass ein Öffnen der Luftfilteranordnung nicht mehr ohne Weiteres möglich ist.

Eine Weiterbildung der Erfindung sieht vor, dass der Rohluftraum einem Gehäuse, einem Rohlufteinlassstutzen, einem flexiblen Rohluftleitelement und/oder einem Rohluftkanal zugeordnet ist. Der Rohluftraum erstreckt sich somit entgegen der Strömungsrichtung ausgehend von dem Filterelement auf alle Bereiche, welche von Rohluft durchströmt werden. Dem Rohluftraum sind demnach alle Bereiche zuzuordnen, welche dem Filterelement strömungstechnisch vorgeschaltet sind. Der Rohluftraum kann beispielsweise dem Gehäuse, dem Rohlufteinlassstutzen, dem Rohluftleitelement und/oder dem Rohluftkanal zugeordnet sein beziehungsweise von diesen ausgebildet sein. Das Gehäuse ist dabei insbesondere derjenige Bereich, in welchem das Filterelement angeordnet beziehungsweise befestigt ist. Der Rohlufteinlassstutzen kann an dem Gehäuse vorgesehen sein, um diesem Rohluft zuzuführen. Eine Rohluftstrecke, also ein Strömungsweg, entlang welchem die Rohluft bis hin zu dem Filterelement strömt, kann auch das flexible Rohluftleitelement und/oder den Rohluftkanal umfassen, wobei das Rohluftleitelement beispielsweise in Form eines Faltenbalges vorliegen kann, sodass eine flexible Verbindung gegeben ist. Die Rohluftstrecke liegt beispielsweise in einer Anordnung vor, in welcher zunächst der Rohluftkanal mit einem Einlassbereich vorliegt, und das Rohluftleitelement eine Verbindung von dem Rohluftkanal zu dem Rohlufteinlassstutzen herstellt, der an dem Gehäuse vorgesehen ist. Der Rohluftkanal kann beispielsweise in Form eines Ansaugkrümmers vorliegen.

Eine Weiterbildung der Erfindung sieht vor, dass der Innenwand eine Wasserabführeinrichtung zugeordnet ist. Die Innenwand kann die Wasserabführeinrichtung aufweisen, in einer anderen Ausführungsform ist letztere jedoch der Innenwand lediglich zugeordnet. Das bedeutet, dass die Wasserabführeinrichtung auch beabstandet von der Innenwand vorgesehen sein kann. Die Wasserabführeinrichtung weist vorzugsweise eine Öffnung auf, durch welche die Flüssigkeit, welche auf der Innenwand des Rohluftraums abgeschieden wurde, aus der Luftfilteranordnung ausgebracht werden kann. Dabei kann die Wasserabführeinrichtung sowohl aktiv als auch passiv ausgeführt sein. Eine aktive Wasserabführeinrichtung weist Mittel (zum Beispiel eine Pumpe) auf, mit welchen die Flüssigkeit beispielsweise abgesaugt werden kann. Die passive Wasserabführeinrichtung führt die Flüssigkeit im Gegensatz dazu ohne zusätzlichen Energieaufwand ab, beispielsweise aufgrund eines Schwerkrafteinflusses. In einer einfachen Ausführungsvariante läuft die Flüssigkeit dabei einfach durch eine Öffnung in der Luftfilteranordnung aus dieser heraus. Mit Vorteil ist die Innenwand derart angeordnet, dass die Flüssigkeit auf die Wasserabführeinrichtung zufließt.

Die Erfindung wird im Folgenden anhand der in der Zeichnung dargestellten Ausführungsbeispiele näher erläutert, ohne dass eine Beschränkung der Erfindung erfolgt. Es zeigen:
- Figur 1: eine Seitenansicht einer Luftfilteranordnung eines Kraftfahrzeugs-Aggregats,
- Figur 2: eine weitere Ansicht der Luftfilteranordnung, wobei ein eine Rohluftschale ver- schließendes weiteres Schalenteil vordergründig angeordnet ist,
- Figur 3: die bekannte Luftfilteranordnung, wobei das weitere Schalenteil entfernt ist, so- dass ein in der Luftfilteranordnung vorgesehenes Filterelement erkennbar ist,
- Figur 4: die Luftfilteranordnung, wobei lediglich die Rohluftschale dargestellt ist, und
- Figur 5: eine weitere Ausführungsform der Luftfilteranordnung.

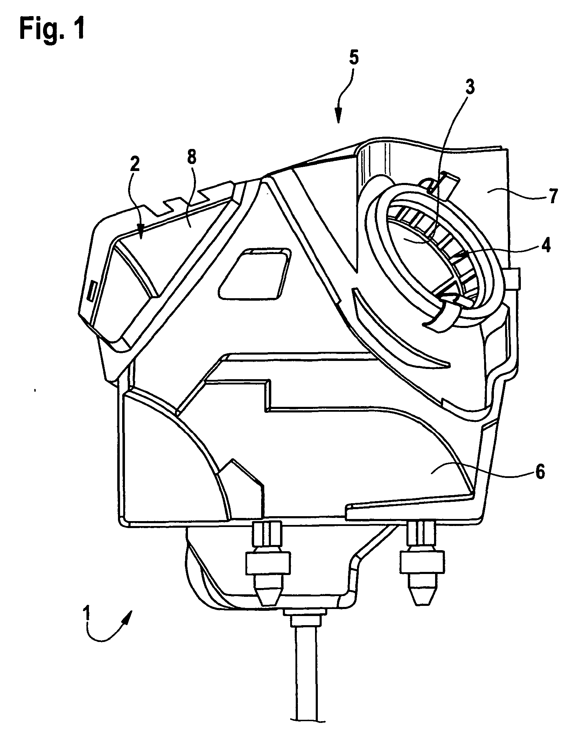

Die Figur 1 zeigt eine Luftfilteranordnung 1, welche zur Filterung von Rohluft für ein nicht dargestelltes Kraftfahrzeug-Aggregat dient. Die Rohluft strömt durch einen Rohlufteinlass 2 in die Luftfilteranordnung 1 ein, durchläuft ein in dieser angebrachtes Filterelement 3, das in der Figur 1 ansatzweise erkennbar ist, und strömt nachfolgend als gefilterte Reinluft aus einem Reinluftauslass 4 aus der Luftfilteranordnung 1 heraus. Beim Durchströmen der Luftfilteranordnung 1 beziehungsweise des Filterelements 3 wird die Rohluft von Fremdstoffen befreit, sodass die aus der Luftfilteranordnung 1 ausströmende Reinluft ohne Weiteres zur Versorgung des Kraftfahrzeug-Aggregats verwendet werden kann. Das Kraftfahrzeug-Aggregat kann beispielsweise eine Brennkraftmaschine des Kraftfahrzeugs sein. Das Filterelement 3 dient dabei insbesondere zum Herausfiltern von Fremdpartikeln, wie beispielsweise Staub. Dabei soll es möglichst verhindert werden, dass eventuell in der Rohluft enthaltene Flüssigkeit mit dem Filterelement 3 in Verbindung kommt, da dieses ansonsten feucht wird, was die Filterleistung herabsetzt. Des Weiteren kann ein durchfeuchtetes Filterelement 3 zusammen mit einem hohen Rohluftmassenstrom dazu führen, dass Flüssigkeit durch das Filterelement 3 durchschlägt und damit zusammen mit der Reinluft aus dem Reintuftauslass 4 der Luftfilteranordnung 1 austreten kann.

Ein Gehäuse 5 der Luftfilteranordnung 1 besteht im Wesentlichen aus einer Rohluftschale 6, einem weiteren Schalenteil 7 und einem Rohlufteinlassstutzen 8. Der Rohlufteinlassstutzen 8 weist den Rohlufteinlass 2, das Schalenteil 7 den Reinluftauslass 4 auf. Das Filterelement 3 ist als Filterpatrone ausgebildet und dabei beispielsweise becherförmig ausgebildet. Die Luft durchströmt das Filterelement 3 radial nach innen, ein Ausströmen aus dem Filterelement 3 beziehungsweise dem Reinluftauslass 4 erfolgt in axialer Richtung des Filterelements 3.

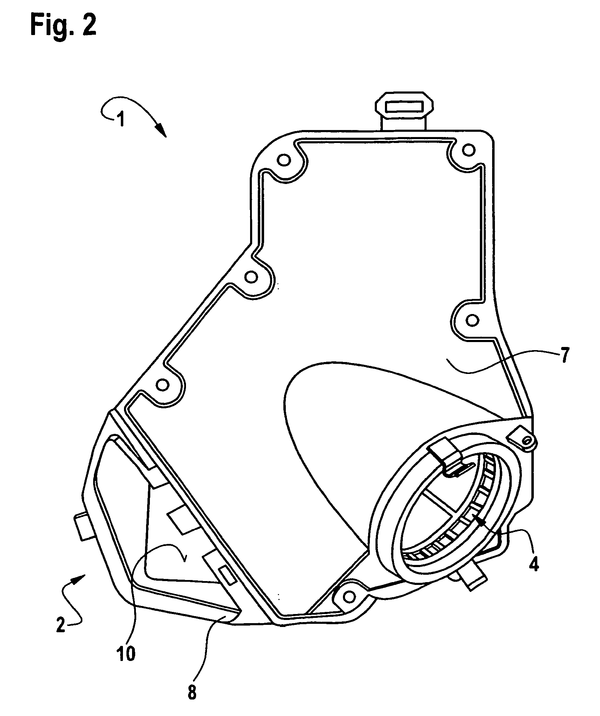

Die Figur 2 zeigt die Luftfilteranordnung 1 aus einer weiteren Perspektive. Dabei ist sie derart angeordnet, dass eine Draufsicht auf das weitere Schalenteil 7 dargestellt ist. Erkennbar ist nun der Rohlufteinlass 2 in dem Rohlufteinlassstutzen 8, ebenso wie der Umstand, dass die durch den Rohlufteinlass 2 einströmende Luft unmittelbar mit einer Innenwand 10 eines Rohluftraums 11 in Kontakt tritt. Der Rohluftraum 11 wird zumindest bereichsweise von der Rohluftschale 6 begrenzt. Die Rohluft strömt demzufolge durch den Rohlufteinlass 2 in die Luftfilteranordnung 1 ein, wird beim Durchlaufen des Filterelements 3 in radialer Richtung gereinigt beziehungsweise gefiltert und strömt als Reinluft aus dem Reinluftauslass 4 des weiteren Schalenteils 7 aus der Luftfilteranordnung 1 aus.

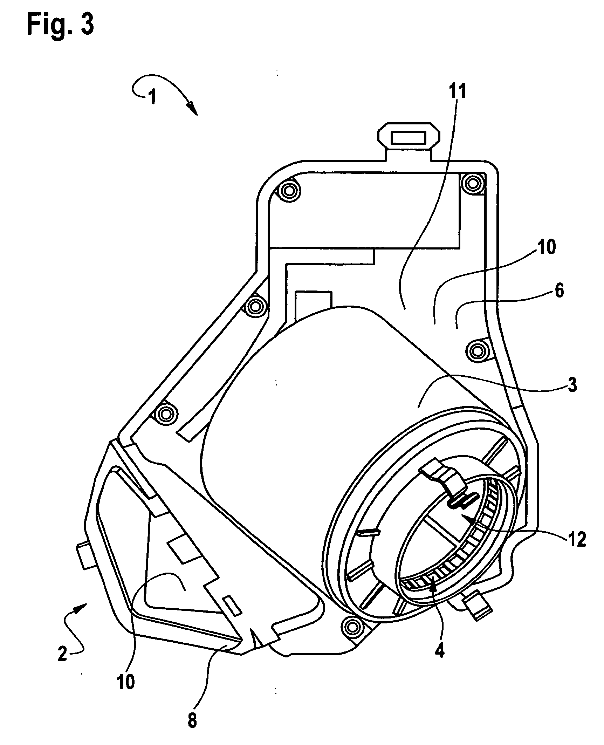

In der Figur 3 ist die Luftfilteranordnung 1 ohne das weitere Schalenteil 7 dargestellt. Es ist also erkennbar, wie das Filterelement 3 in der Rohluftschale 6 angeordnet ist. Die Rohluftschale 6 dient zur Führung der durch den Rohlufteinlass 4 in die Luftfilteranordnung 1 einströmenden Rohluft um das Filterelement 3 herum. Dabei wird aus der Rohluft darin enthaltene Flüssigkeit abgeschieden und lagert sich auf der Innenwand 10 des Rohluftraums 11 an. Die so von Flüssigkeit im Wesentlichen befreite Rohluft durchströmt anschließend das Filterelement 3, welches dem Rohluftraum 11 strömungstechnisch nachgeschaltet ist. Dabei durchströmt das Rohgas das Filterelement 3 im Wesentlichen in radialer Richtung, um in einen Reinluftsammelraum 12 zu gelangen. Aus diesem strömt die gefilterte Luft, also die Reinluft, aus dem Reinluftauslass 4 aus der Luftfilteranordnung 1 heraus. Die Rohluftschale 6 bildet den Rohluftraum 11, insbesondere zusammen mit dem weiteren Schalenteil 7. Der Rohluftraum 11 erstreckt sich zumindest bereichsweise um das Filterelement 3 herum. Der Rohluftraum 11 ist, wie vorstehend beschrieben, dem Filterelement 3 strömungstechnisch vorgeschaltet. Die Innenwand 10 ist dabei dem Rohluftraum 11 zugeordnet, sodass die Innenwand 10 sowohl an der Rohluftschale 6 als auch an dem weiteren Schalenteil 7 vorliegen kann.

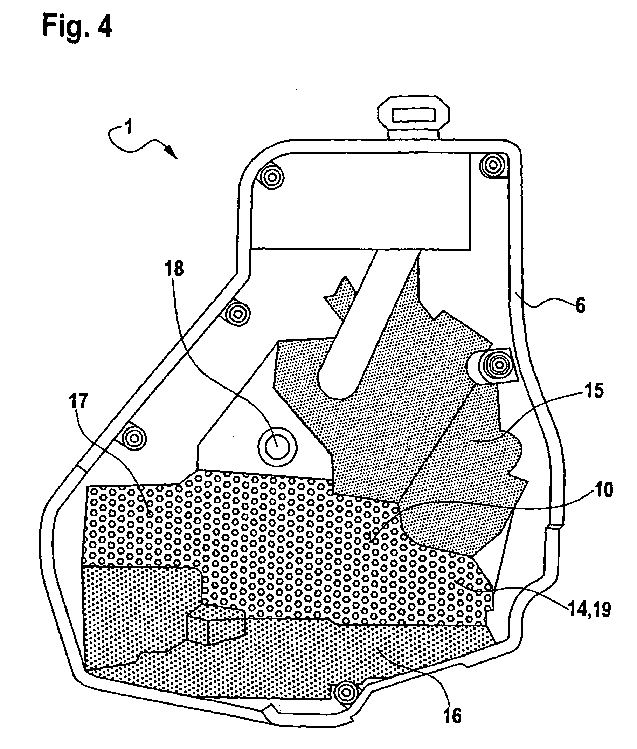

Die Figur 4 zeigt die Luftfilteranordnung 1, wobei lediglich die Rohluftschale 6 dargestellt ist. Es ist ein Bereich 14 sowie weitere Bereiche 15 und 16 hervorgehoben, in welchen die Innenwand 10 mit einer nicht weiter dargestellten Oberflächenstruktur 17 versehen sein soll. Es ist jedoch auch möglich, dass lediglich der Bereich 14 die Oberflächenstruktur 17 aufweist. Die Oberflächenstruktur 17 ist dabei materialeinheitlich zum Material der Innenwand 10 ausgebildet. Mit dieser Oberflächenstruktur 17 soll erreicht werden, dass aus Rohluft ausgeschiedene Flüssigkeit sich auf der Innenwand 10 als Flüssigkeitsfilm und nicht in Form von Tropfen ablagert. Dies hat den Vorteil, dass der Flüssigkeitsfilm nicht im Gegensatz zu den Tropfen mehr oder nur noch in verminderter Form von der darüber strömenden Rohluft zurück in den Rohluftstrom befördert wird und somit in das Filterelement 3 gelangt. Des Weiteren läuft der Flüssigkeitsfilm deutlich einfacher an der Innenwand 10 in Richtung einer Wasserabführeinrichtung 18 ab, als dies der Fall wäre, wenn die Flüssigkeit in Tropfenform vorläge.

Die Wasserabführeinrichtung 18 ist in dem dargestellten Beispiel als Bohrung in der Innenwand 10 ausgebildet. Dabei sind die Bereiche 14, 15 und 16 derart angeordnet, dass auf ihnen abgeschiedene Flüssigkeit in Richtung der Wasserabführeinrichtung 18 abläuft. Das bedeutet, dass die Bereiche 14, 15 und 16 in Richtung der Wasserabführeinrichtung 18 abfallend beziehungsweise zu dieser hingeneigt ausgebildet sind. An der Wasserabführeinrichtung 18 kann beispielsweise ein Gummielement vorgesehen sein, mit welchem das Wasser abgeführt wird. Der Bereich 14 ist in dem dargestellten Beispiel ein Bodenbereich 19, während die weiteren Bereiche 15 und 16 an seitlichen Innenwänden der Rohluftschale 6 vorgesehen sind.

Die Rohluft tritt also durch den in den Figuren 1 bis 3 dargestellten Rohlufteinlass 2 in die Luftfilteranordnung 1 ein, überströmt primär den Bereich 14, aber auch die weiteren Bereiche 15 und 16, wobei Flüssigkeit aus der Rohluft abgeschieden wird. Diese Flüssigkeit gelangt durch die Wasserabführeinrichtung 18 aus der Luftfilteranordnung 1 heraus. Die von dem Wasser im Wesentlichen befreite Rohluft durchströmt anschließend das Filterelement 3 bis in den Reinluftsammelraum 12 und gelangt anschließend durch den Reinluftauslass 4 aus der Luftfilteranordnung 1 heraus und kann anschließend in Form von Reinluft dem Kraftfahrzeug-Aggregat zugeführt werden. Das Kraftfahrzeug-Aggregat ist beispielsweise eine Brennkraftmaschine des Kraftfahrzeugs. Die Oberflächenstruktur 17 in den Bereichen 14, 15 und 16 ist durch Aufrauung gebildet. Es kann dabei vorgesehen sein, dass die Oberflächenstruktur eine Sandstrahlstruktur ist, also durch Sandstrahlen der Innenwand 10 erzeugt wird. Alternativ kann es jedoch auch vorgesehen sein, dass die Oberflächenstruktur 17 zusammen mit der Innenwand 10 erstellt ist, beispielsweise mit einem Spritzgussverfahren. Dabei kann eine Form zur Herstellung der Innenwand derart strukturiert sein, dass beim Herstellen der Innenwand 10 die Oberflächenstruktur ausgebildet wird. Das bedeutet, dass zumindest ein Bereich eines Werkzeugs, mit welchem die Innenwand 10 erzeugt wird eine beispielsweise durch Sandstrahlen erzeugte Struktur aufweist. Vorteilhafterweise besteht das Gehäuse 5 der Luftfilteranordnung 1 aus einem Kunststoff.

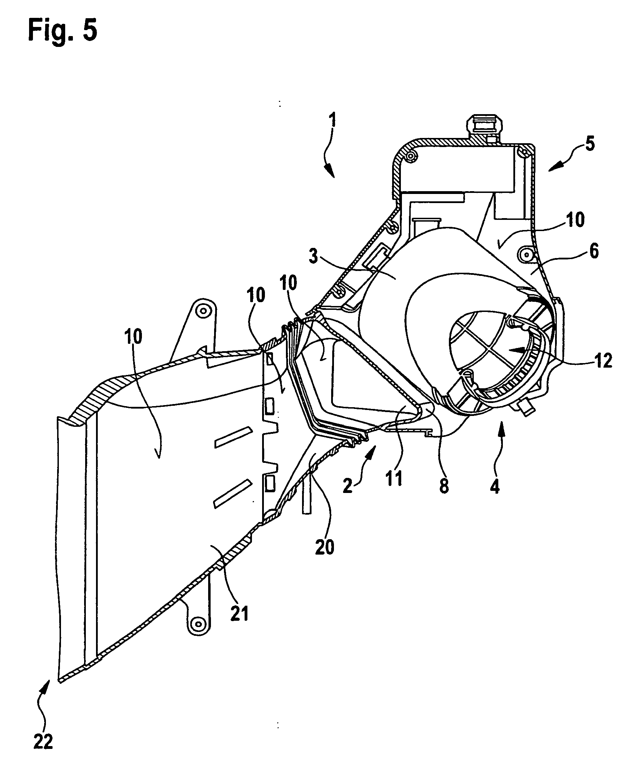

Die Figur 5 zeigt eine weitere Ausführungsform der Luftfilteranordnung 1. Das Gehäuse 5 mit darin angeordnetem Luftfilter 3 weist im Wesentlichen den in den Figuren 1 bis 5 gezeigten Aufbau auf. Dem Gehäuse 5 des Luftfilters 3 sind nun über den Rohlufteinlassstutzen 8 ein flexibles Rohluftleitelement 20 und ein Rohluftkanal 21 strömungstechnisch vorgeschaltet. Rohlufteinlassstutzen 8, Rohluftleitelement 20 und Rohluftkanal 21 sind ebenso wie das Gehäuse 5 geschnitten dargestellt, sodass die Innenwand 10 des Rohluftraums 11 erkennbar ist.

Der Rohluftraum 11 wird in dem vorliegenden Fall sowohl von dem Gehäuse 5, als auch dem Rohlufteinlassstutzen 8, dem Rohluftleitelement 20 und dem Rohluftkanal 21 definiert. Der Rohluftraum 11 verläuft also von einem Einlassbereich 22 des Rohluftkanals 21 strömungstechnisch gesehen bis hin zu dem Luftfilter 3. Die Innenwand 10 liegt demzufolge sowohl in dem Rohluftkanal 21, dem Rohluftleitelement 20, dem Rohlufteinlassstutzen 8 sowie dem Gehäuse 5 vor. Um Flüssigkeit aus der Rohluft abzuscheiden, welche vom Einlassbereich 22 bis hin zu dem Luftfilter 3 strömt, werden Bereiche der Innenwand (welche in Figur 5 nicht besonders hervorgehoben sind) mit der Oberflächenstruktur 17 versehen. Diese Oberflächenstruktur 17 ist materialeinheitlich zum Material der Innenwand 10 ausgebildet. Aufgrund der Oberflächenstruktur 17, die beispielsweise eine durch Aufrauung gebildete Struktur ist, wird erreicht, dass aus der Rohluft ausgeschiedene Flüssigkeit sich auf der Innenwand 10 als Flüssigkeitsfilm und nicht in Tropfenform ablagert. Auf diese Weise wird eine effizientere Flüssigkeitsabscheidung in der Luftfilteranordnung 1 erreicht.

Die ausgeschiedene Flüssigkeit kann mittels der Wasserabführeinrichtung 18 aus der Luftfilteranordnung 1 ausgebracht werden. Auf diese Weise wird verhindert, dass Flüssigkeit in den Luftfilter 3 gelangt, womit es zu einem Durchfeuchten des Luftfilters 3 und folglich einer Herabsetzung der Filterleistung oder sogar einer Beschädigung des Luftfilters 3 kommen könnte. Der Rohluftkanal 21 ist beispielsweise als Ansaugkrümmer, das Rohluftleitelement 20 als Faltenbalg und der Rohlufteinlassstutzen 8 als Luftleitteil ausgebildet.

Die Oberflächenstruktur 17 kann auf der gesamten Innenwand 10 von Rohluftkanal 21, Rohluftleitelement 20, Rohlufteinlassstutzen 8 und Gehäuse 5 vorliegen. Es können jedoch auch lediglich Bereiche der Innenwand 10 mit der Oberflächenstruktur 17 versehen sein.

### BEZUGSZEICHENLISTE

- 1: Luftfilteranordnung
- 2: Rohlufteinlass
- 3: Filterelement
- 4: Reinluftauslass
- 5: Gehäuse
- 6: Rohluftschale
- 7: weiteres Schalenteil
- 8: Rohlufteinlassstutzen
- 10: Innenwand
- 11: Rohluftraum
- 12: Reinluftsammelraum
- 14: Bereich
- 15: weiterer Bereich
- 16: weiterer Bereich
- 17: Oberflächenstruktur
- 18: Wasserabführeinrichtung
- 19: Bodenbereich
- 20: Rohluftleitelement
- 21: Rohluftkanal
- 22: Einlassbereich

## Patentansprüche

1. Luftfilteranordnung (1) eines Kraftfahrzeug-Aggregats, insbesondere einer Brennkraftmaschine eines Kraftfahrzeugs, mit einem Filterelement (3), dem ein eine Innenwand (10) aufweisender Rohluftraum (11) strömungstechnisch vorgeschaltet ist, wobei die Innenwand (10) den Rohluftraum (11) nach außen begrenzt, **dadurch gekennzeichnet, dass** die Innenwand (10) des Rohluftraums (11) zumindest in einem von Rohluft angeströmten Bodenbereich (14,19) des Rohluftraums (11) mit einer materialeinheitlich zum Material der Innenwand (10) ausgebildeten Oberflächenstruktur (17) versehen ist, wobei die Oberflächenstruktur (17) regelmäßig ausgebildet ist und auf der Oberfläche der Innenwand (10) ausgebildete Strukturelemente aufweist, sodass eine Unebenheit in einer Oberflächenhöhe der Innenwand (10) vorliegt.

2. Luftfilteranordnung nach Anspruch 1, **dadurch gekennzeichnet, dass** die Oberflächenstruktur eine Narbenstruktur ist.

3. Luftfilteranordnung nach einem der vorhergehenden Ansprüche, **dadurch gekennzeichnet, dass** die Oberflächenstruktur (17) zusammen mit der Innenwand (10) erstellt ist.

4. Luftfilteranordnung nach einem der vorhergehenden Ansprüche, **dadurch gekennzeichnet, dass** die Innenwand (10) ein Spritzgussteil oder ein Bereich eines Spritzgussteils, insbesondere jeweils aus Kunststoff, ist.

5. Luftfilteranordnung nach einem der vorhergehenden Ansprüche, **dadurch gekennzeichnet, dass** der Rohluftraum (11) eine Rohluftschale (6) aufweist, die mit der Oberflächenstruktur (17) versehen ist.

6. Luftfilteranordnung nach einem der vorhergehenden Ansprüche, **dadurch gekennzeichnet, dass** der Rohluftraum (11) einem Gehäuse (5), einem Rohlufteinlassstutzen (8), einem flexiblen Rohluftleitelement (20) und/oder einem Rohluftkanal (21) zugeordnet ist.

7. Luftfilteranordnung nach einem der vorhergehenden Ansprüche, **dadurch gekennzeichnet, dass** der Innenwand (10) eine Wasserabführeinrichtung (18) zugeordnet ist.

8. Luftfilteranordnung nach einem der vorhergehenden Ansprüche, **dadurch gekennzeichnet, dass** die Oberflächenstruktur (17) derart ausgebildet ist, dass sich auf der Innenwand (10) aus dort abgelagerter Flüssigkeit ein Flüssigkeitsfilm bildet.

9. Luftfilteranordnung nach einem der vorhergehenden Ansprüche, **dadurch gekennzeichnet, dass** die die Strukturelemente kleiner als 1 mm sind.

10. Luftfilteranordnung nach einem der vorhergehenden Ansprüche, **dadurch gekennzeichnet, dass** lediglich der Bodenbereich (14,19) der Innenwand (10) mit der Oberflächenstruktur (17) versehen ist.

11. Luftfilteranordnung nach einem der vorhergehenden Ansprüche, **dadurch gekennzeichnet, dass** der Bodenbereich (14,19) in einem Eintrittsbereich der Luftfilteranordnung (1) angeordnet ist, in welchem die Rohluft auf den Bodenbereich (14,19) der Innenwand (10) zuströmt, auf diesen auftrifft und umgelenkt wird.

## Claims

1. Air filter arrangement (1) of a motor vehicle power unit, in particular of an internal combustion engine of a motor vehicle, having a filter element (3), upstream of which in terms of flow is positioned an untreated air chamber (11) which has an inner wall (10), wherein the inner wall (10) delimits the untreated air chamber (11) to the outside, **characterized in that**, at least in a base region (14, 19) of the untreated air chamber (11), in which a flow of untreated air is admitted, the inner wall (10) of the untreated air chamber (11) is provided with a surface structure (17) formed materially integrally with the material of the inner wall (10), wherein the surface structure (17) is of regular design and has structure elements formed on the surface of the inner wall (10), such that there is unevenness in a height of a surface of the inner wall (10).

2. Air filter arrangement according to Claim 1, **characterized in that** the surface structure is a pitted structure.

3. Air filter arrangement according to one of the preceding claims, **characterized in that** the surface structure (17) is produced together with the inner wall (10).

4. Air filter arrangement according to one of the preceding claims, **characterized in that** the inner wall (10) is an injection-moulded part or a region of an injection-moulded part, in particular composed in each case of plastic.

5. Air filter arrangement according to one of the preceding claims, **characterized in that** the untreated air chamber (11) has an untreated air shell (6) which is provided with the surface structure (17).

6. Air filter arrangement according to one of the preceding claims, **characterized in that** the untreated air chamber (11) is assigned a housing (5), an untreated air inlet connecting piece (8), a flexible untreated air guiding element (20), and/or an untreated air duct (21).

7. Air filter arrangement according to one of the preceding claims, **characterized in that** the inner wall (10) is assigned a water drainage device (18).

8. Air filter arrangement according to one of the preceding claims, **characterized in that** the surface structure (17) is designed such that liquid deposited on the inner wall (10) forms a liquid film thereon.

9. Air filter arrangement according to one of the preceding claims, **characterized in that** the structure elements are smaller than 1 mm.

10. Air filter arrangement according to one of the preceding claims, **characterized in that** only the base region (14, 19) of the inner wall (10) is provided with the surface structure (17).

11. Air filter arrangement according to one of the preceding claims, **characterized in that** the base region (14, 19) is arranged in an inlet region of the air filter arrangement (1), in which the untreated air flows to the base region (14, 19) of the inner wall (10), impinges against said base region and is diverted.

## Revendications

1. Agencement de filtre à air (1) d'un groupe d'un véhicule automobile, en particulier d'un moteur à combustion interne d'un véhicule automobile, comprenant un élément de filtre (3), en amont duquel, du point de vue de la technique d'écoulement, est monté un espace d'air brut (11) présentant une paroi interne (10), la paroi interne (10) délimitant vers l'extérieur l'espace d'air brut (11), **caractérisé en ce que** la paroi interne (10) de l'espace d'air brut (11) est pourvue, au moins dans une région de fond (14, 19) de l'espace d'air brut (11) sur laquelle afflue l'air brut, d'une structure de surface (17) réalisée dans le même matériau que le matériau de la paroi interne (10), la structure de surface (17) étant réalisée de manière régulière et présentant des éléments structurels réalisés sur la surface de la paroi interne (10), de sorte que la hauteur de la surface de la paroi interne (10) ne soit pas uniforme.

2. Agencement de filtre à air selon la revendication 1, **caractérisé en ce que** la structure de surface est une structure à grain.

3. Agencement de filtre à air selon l'une quelconque des revendications précédentes, **caractérisé en ce que** la structure de surface (17) est créée conjointement avec la paroi interne (10).

4. Agencement de filtre à air selon l'une quelconque des revendications précédentes, **caractérisé en ce que** la paroi interne (10) est une pièce moulée par injection ou une région d'une pièce moulée par injection, notamment en plastique.

5. Agencement de filtre à air selon l'une quelconque des revendications précédentes, **caractérisé en ce que** l'espace d'air brut (11) présente une coque d'air brut (6) qui est munie de la structure de surface (17).

6. Agencement de filtre à air selon l'une quelconque des revendications précédentes, **caractérisé en ce que** l'espace d'air brut (11) est associé à un boîtier (5), une tubulure d'admission d'air (8), un élément de guidage d'air brut flexible (20) et/ou un canal d'air brut (21).

7. Agencement de filtre à air selon l'une quelconque des revendications précédentes, **caractérisé en ce que** la paroi interne (10) est associée à un dispositif d'évacuation d'eau (18).

8. Agencement de filtre à air selon l'une quelconque des revendications précédentes, **caractérisé en ce que** la structure de surface (17) est réalisée de telle sorte qu'un film de liquide se forme sur la paroi interne (10) à partir du liquide déposé sur celle-ci.

9. Agencement de filtre à air selon l'une quelconque des revendications précédentes, **caractérisé en ce que** les éléments structurels sont inférieurs à 1 mm.

10. Agencement de filtre à air selon l'une quelconque des revendications précédentes, **caractérisé en ce que** seulement la région du fond (14, 19) de la paroi interne (10) est pourvue de la structure de surface (17).

11. Agencement de filtre à air selon l'une quelconque des revendications précédentes, **caractérisé en ce que** la région de fond (14, 19) est disposée dans une région d'entrée de l'agencement de filtre à air (1) dans laquelle l'air brut afflue sur la région de fond (14, 19) de la paroi interne (10), vient frapper celle-ci et est dévié.
